# FASCICULE DE BREVET EUROPEEN

(11) **EP 0 652 842 B1**
(45) Date de publication et mention de la délivrance du brevet: **05.03.1997**
(21) Numéro de dépôt: 94917700.0
(22) Date de dépôt: 01.06.1994
(51) Int. Cl.: B65D 83/00, B29C 45/16

(54) **ENSEMBLE DE DISTRIBUTION COMPRENANT UN RECIPIENT CYLINDRIQUE COMPORTANT UN PISTON**
ABGABEVORRICHTUNG MIT EINEM ZYLINDRISCHEN BEHÄLTER UND EINEM KOLBEN
DISPENSING UNIT COMPRISING A CYLINDRICAL CONTAINER ENCLOSING A PISTON

(30) Priorité: 04.06.1993 FR 9306704
(43) Date de publication de la demande: 17.05.1995
(73) Titulaire: L'OREAL, 75008 Paris (FR)
(72) Inventeur: DE LAFORCADE, Vincent, F-78120 Rambouillet (FR); LACOUT, Franck, F-91200 Athis-Mons (FR)
(74) Mandataire: Peuscet, Jacques
(86) Numéro de dépôt international: FR9400639
(87) Numéro de publication internationale: WO9429190

(56) Documents cités:
- EP-A- 0 001 452
- EP-A- 0 254 258
- EP-A- 0 426 408
- WO-A-84/02278
- FR-A- 1 200 293
- GB-A- 2 192 577
- US-A- 4 027 810
- US-A- 4 907 727

## Description

La présente invention a pour objet un ensemble de distribution comprenant un récipient cylindrique comportant un piston.

Plus particulièrement, la présente invention concerne un ensemble de distribution comprenant un récipient et un organe de distribution pour la distribution du produit contenu dans le récipient, le récipient étant cylindrique et comportant un piston constitué d'un corps en matériau rigide ayant une partie cylindrique portant un joint d'étanchéité en matériau élastique.

En général, jusqu'ici, le piston comprend un corps en matière plastique moulée rigide, dont une partie de section circulaire présente à la périphérie une lèvre venue de moulage avec le corps du piston et située axialement au voisinage d'une gorge dans laquelle est placé un joint torique.

Un tel piston présente les inconvénients, d'une part, de ne pas être d'une étanchéité à toute épreuve, par construction et notamment dans le cas où le produit à distribuer est de faible viscosité, et, d'autre part, d'un prix de revient élevé, en particulier lorsqu'il est fabriqué en grande série, ces inconvénients étant expliqués plus en détails dans la description qui suit. Notamment, lors de la distribution de produits susceptibles d'être dégradés en contact avec l'air ambiant, tel qu'une teinture capillaire, une étanchéité quasi parfaite est requise, en particulier dans le cas où ce piston est propulsé par un gaz sous pression tel que l'air comprimé.

Des tentatives ont déjà été faites pour réaliser un joint de piston de manière économique; ainsi, US-A-4 027 810 décrit un piston-plongeur étanche de cartouche pour jointement et calfatage dont le joint est agencé de manière à assurer une étanchéité parfaite pendant toute la durée d'un long stockage de la cartouche, les produits qu'elle contient étant sensibles à l'air et à l'humidité, et ce compte-tenu des phénomènes de contraction et dilatation thermiques ; dès lors, le joint est compliqué à mouler ainsi que les moyens d'ancrage nécessaires à la solidarisation du joint au corps du piston-plongeur, bien que ce joint en utilisation ne serve que le temps de consommer le produit contenu dans la cartouche qui est ensuite jetée. GB-A-2 192 577 décrit un raccord de gouttière muni d'un joint ; le raccord et le joint sont en matières plastiques moulées chimiquement compatibles permettant par surmoulage in situ du joint sur le raccord d'assurer la solidarisation du joint et d'éviter d'avoir à prévoir des moyens de maintien du joint le temps du montage de la gouttière et de diminuer dès lors le coût du montage ; il est à remarquer que, d'une part, un tel joint est un joint statique et que, d'autre part, il est prévu dans le document d'assister, si nécessaire, la solidarisation du joint par voie chimique d'une solidarisation mécanique par moulage de queues d'aronde par exemple.

La présente invention est basée sur la constatation faite par les inventeurs que, d'une manière surprenante, un piston mobile équipé d'un joint surmoulé in situ, le piston et le joint étant en des matières chimiquement compatibles, donnait entière satisfaction dès l'instant que le joint présentait au moins une portion semi-torique assurant l'étanchéité et le coulissement dans les deux sens du piston qui peut ainsi être utilisé pour de nombreuses distributions de produit.

Ainsi, selon l'invention, un ensemble de distribution, comprenant un récipient et un organe de distribution pour la distribution du produit contenu dans le récipient, le récipient étant cylindrique et comportant un piston constitué d'un corps en matériau rigide ayant une partie cylindrique portant un joint d'étanchéité en matériau élastique, est caractérisé par le fait que le joint d'étanchéité est obtenu par surmoulage du corps du piston en matériau rigide, le matériau élastique et le matériau rigide étant chimiquement compatibles pour assurer la liaison du joint et du corps du piston, le joint présentant au moins une portion semi-torique et une lèvre d'étanchéité.

Avantageusement, le joint présente au moins deux portions semi-toriques.

Selon une réalisation préférée de l'invention, le joint est placé au droit d'une portion intermédiaire du corps du piston, mais il pourrait être placé sur toute la hauteur du cylindre ; en variante, le joint est placé au droit du bord de l'extrémité ouverte du corps du piston.

De préférence, le joint en matériau élastique a une dureté Shore A comprise entre 30 et 120 ; le couple de matériaux rigide et élastique est un couple de matériaux thermoplastiques choisi dans le groupe formé par les couples polypropylène-EPDM, polypropylène-polyéthylène, polypropylène-styréniques, polypropylène-copolymère EPDM/polypropylène, polyamide-polyéthylène, polyester-EPDM, polystyrène-polyéthylène. Dans la présente description et dans les revendications, l'abréviation EPDM désigne un copolymère (éthylène/propylène diène, polyméthylène).

L'invention permet de distribuer un produit ayant une viscosité comprise entre une valeur voisine de 1 poise et une valeur voisine de 70 poises en toute sécurité, c'est-à-dire sans fuite entre le piston et la paroi intérieure du récipient.

Selon une forme de réalisation, l'organe de distribution est une pompe sans reprise d'air, le fond du récipient comportant un orifice de reprise d'air.

En variante, l'organe de distribution est une valve de distribution, le piston étant poussé par un propulseur gazeux sous pression prévu dans le volume compris entre le fond du récipient et le piston. Dans cette variante, le fond du récipient est muni d'un système de remplissage pour le remplissage en propulseur gazeux : par exemple, le propulseur gazeux est introduit par injection au travers d'un bouchon obturant un orifice situé au fond du récipient.

Selon une autre variante, l'organe de distribution est le piston lui-même, actionnable manuellement, l'ensemble de distribution constituant une seringue.

Pour mieux faire comprendre l'objet de l'invention, on va en décrire, maintenant, à titre d'exemple purement illustratif et non limitatif, un mode de réalisation représenté sur les dessins annexés.

Sur ces dessins :
- la figure 1 est une vue partielle en coupe d'un ensemble de distribution selon l'invention ;
- la figure 2 est une vue en coupe d'un piston de l'art antérieur ;
- les figures 3 à 5 montrent schématiquement les opérations de moulage conduisant au piston selon l'invention ;
- la figure 6 représente partiellement en coupe une variante de piston selon l'invention ;
- la figure 7 représente en coupe une autre variante de piston selon l'invention.

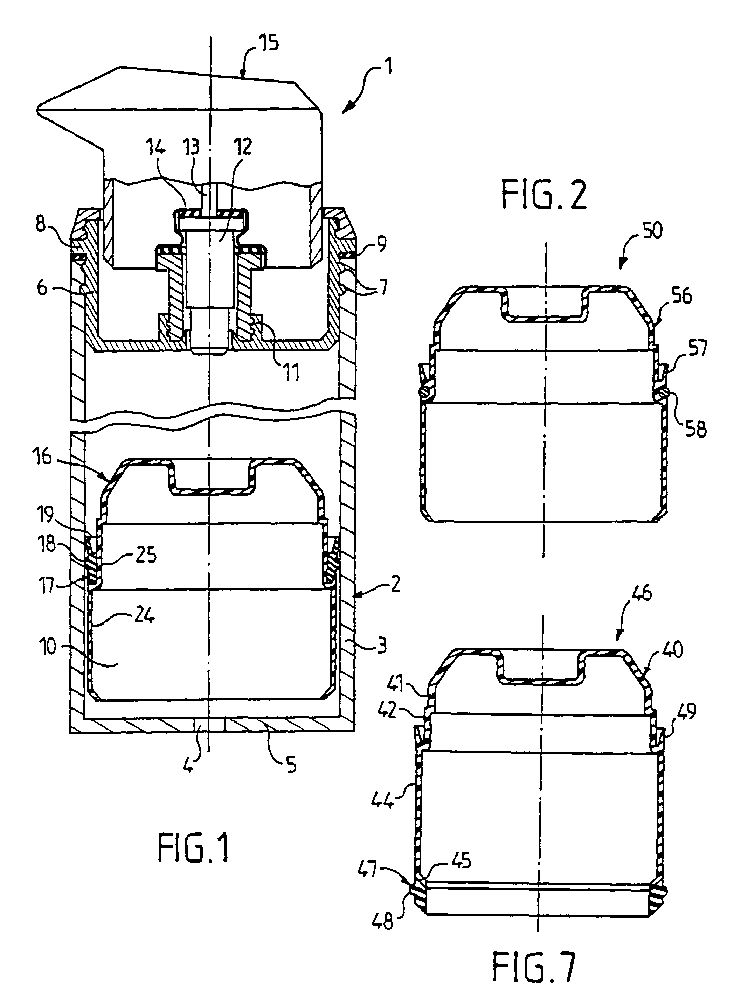

L'ensemble de distribution 1 représenté sur la figure 1 comprend un récipient 2 rigide en matériau thermoplastique extrudé ou injecté à paroi latérale cylindrique 3 ; le récipient 2 comprend, à l'intérieur de la paroi 3, un piston suiveur 16 dont la face opposée au produit contenu dans le récipient 2 est soumise à la pression atmosphérique grâce à l'existence d'un trou 4 prévu dans le fond 5 du récipient 2 ; un ressort pourrait être disposé entre le fond 5 et le piston 16.

Une embase 6 en forme de cuvette est encliquetée à l'extrémité supérieure du récipient 2 à l'aide de bourrelets 7 reçus par des gorges conjuguées prévues sur la surface intérieure de la paroi 3 ; une collerette 8 portée par l'embase 6 vient coiffer l'extrémité supérieure de la paroi 3 avec serrage d'une rondelle d'étanchéité 9.

Un organe de distribution, par exemple une pompe de distribution 12 sans reprise d'air, est supporté de façon étanche par une coupelle 14 sertie à la partie supérieure d'un manchon dans lequel elle s'étend ; le manchon est claqué, également de façon étanche, sur un fourreau 11 porté par le fond de l'embase 6, dans la concavité de ladite embase 6 ; la tige 13 de distribution de la pompe 12 supporte un organe de manoeuvre 15 en forme de bouton-poussoir ; un tel ensemble de distribution est bien connu en soi et ne sera pas décrit plus en détail.

La figure 2 représente un piston 50 équipant habituellement un ensemble de distribution du genre de celui décrit à propos de la figure 1 ; le piston 50 comprend un corps 56 en matière plastique moulée rigide, de section circulaire, présentant à la périphérie une lèvre 57 venue de moulage et située axialement au voisinage d'une gorge dans laquelle est placé un joint torique 58 ; un tel piston 50 présente des inconvénients : d'une part, des fuites peuvent se produire entre le joint et la paroi interne du récipient, et/ou entre le joint et le piston du fait que, monté roulant dans la gorge du piston, le joint n'est pas monté serré de façon identique sur toute la périphérie de la gorge ; d'autre part, la technologie de moulage conduit à la présence, à la surface du joint torique, d'une micro-bavure correspondant au plan de joint des deux machoires du moule, cette micro-bavure étant située dans le plan du plus grand diamètre du tore, ou dans un plan voisin de celui-ci : cette micro-bavure est à l'origine de certaines fuites lorsqu'elle se trouve être en contact avec la paroi interne du récipient, et que le joint n'est pas monté serré. Un tel piston 50 est en outre onéreux car non seulement la fabrication du corps du piston nécessite un moule à tiroir, l'obtention de la gorge destinée à recevoir le joint torique ne pouvant pas être obtenue autrement, mais également l'opération de montage du joint torique dans ladite gorge n'est pas gratuite, même en automatique.

Le piston 16, conformément à la présente invention, ne présente pas ces inconvénients.

Le corps 10 du piston 16 est constitué d'un matériau thermoplastique rigide et le joint 17 d'un matériau flexible, comme un thermoplastique ou un élastomère dont la sureté Shore A est de l'ordre de 30 à 120, inférieure à celle du corps 10 ; le corps 10 du piston 16 est de forme concave et sa concavité est dirigée vers le fond 5 du récipient 2 lorsqu'il est monté dans celui-ci ; le corps 10 présente sur au moins une partie de sa longueur, correspondant à une portion cylindrique inférieure 24, un diamètre extérieur égal, au jeu de montage près, au diamètre intérieur de la paroi 3 du récipient 2.

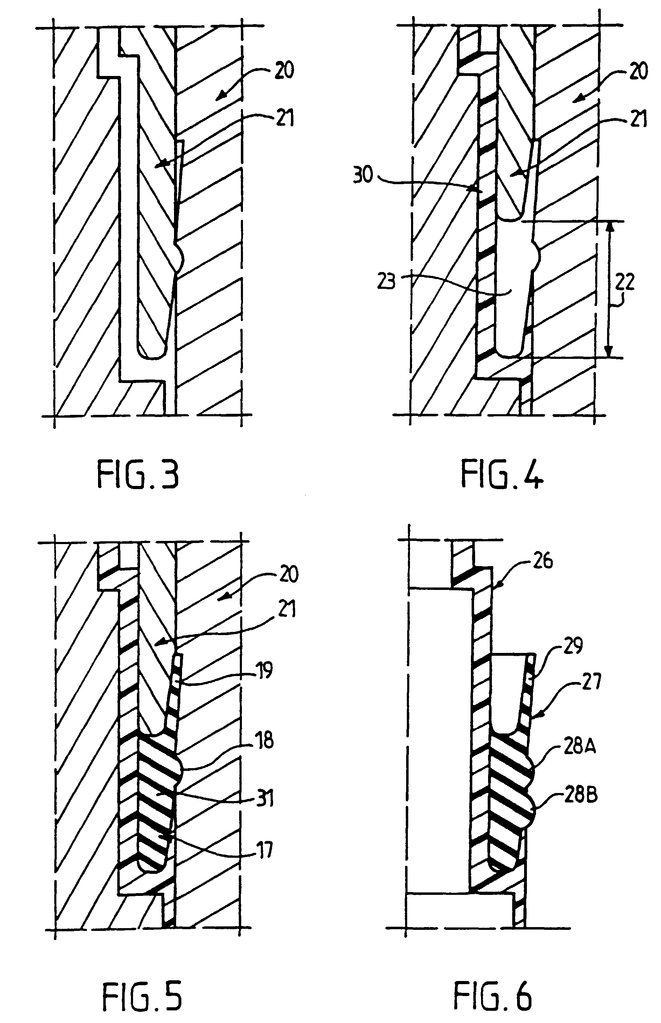

Le joint 17 placé au droit d'une portion cylindrique 25 du corps 10 de diamètre légèrement inférieur à celui de la portion 24, présente une lèvre 19 et une portion semi-torique 18 située au voisinage de la lèvre 19 ; le joint 17 est obtenu en surmoulant partiellement le corps 10, in situ, dans un deuxième temps, après l'opération de moulage proprement dite du corps 10 ; les figures 3 à 5 montrent schématiquement ces diverses opérations : sur la figure 3, les deux machoires 20 et 21, à empreintes, du moule de la machine de moulage sont fermées et prêtes à recevoir le matériau rigide 30 pour réaliser le corps 10 du piston 16, et, dans un premier temps, le corps 10 est moulé ; dans un deuxième temps, comme montré sur la figure 4, les machoires 20 et 21 sont écartées l'une de l'autre, selon un jeu 22, libérant ainsi un volume 23 dans lequel est injecté le matériau élastique 31, comme cela est visible sur la figure 5, pour réaliser le joint 17 dont la lèvre 19 et la portion semi-torique 18 sont ainsi réalisées en même temps et d'une seule pièce. On aura noté que cette opération de surmoulage a permis non seulement la réalisation du joint 17 mais également son montage sur le corps 10 du piston 16 sur lequel il est maintenu en raison du fait que les matériaux 30 et 31 ont été prévus chimiquement compatibles pour assurer une cohésion entre les deux matériaux obtenue par la formation, lors du moulage, de liaisons d'adhésion par mélange des matériaux à l'interface. On peut prendre comme couples de matériaux rigide et élastique des couples composés, par exemple de polyoléfine, polyester, polystyrène ou polyamide, pour le corps 10 du piston 16 et d'un mélange de polyoléfines ou d'autres polyoléfines pour le joint 17 : ces couples peuvent être, par exemple polypropylène-EPDM, polypropylène-polyéthylène, polypropylène-styréniques, polypropylène-copolymère EPDM/polypropylène, nylon-polyéthylène...

Les produits couramment utilisés, dans ce type d'ensemble de distribution, ont une viscosité de 10 à 50 poises ; il peut s'agir d'une émulsion d'huile dans l'eau (ou d'eau dans l'huile), dont la viscosité est de l'ordre de 12 poises, d'un gel, dont la viscosité est de l'ordre de 50 poises, d'un liquide épaissi, dont la viscosité est de l'ordre de 30 poises, voir des produits de viscosité supérieure à 50 poises, pouvant par exemple aller jusqu'à 70 poises ; la présente invention permet de distribuer, avec un tel type d'ensemble de distribution, un produit de viscosité encore plus faible, pouvant même descendre au dessous de 1 poise : il suffit, si nécessaire, de prévoir un joint ayant deux ou plusieurs portions semi-toriques, ce qui est réalisable facilement et à moindre coût grâce à l'invention ; la figure 6 représente un tel joint 27 solidaire du corps 26 du piston, le joint 27 comportant, outre la lèvre 29, deux portions 28A, 28B semi-toriques.

Des produits variés peuvent être distribués : gels automoussants, par exemple gels à raser, produits dépilatoires, crèmes de soin, produits de soin capillaire, de coloration... Le récipient 2 a été décrit en matériau thermoplastique extrudé ou injecté ; en variante, il est en alu monobloc, et le piston y a été introduit avant conformation du col pour fixation de l'organe de distribution.

L'organe de distribution de l'ensemble de distribution décrit à propos de la figure 1 comporte une pompe de distribution ; bien entendu, l'organe de distribution pourrait être une valve de distribution et le piston poussé par un propulseur gazeux sous pression prévu dans le volume compris entre le fond du récipient et le piston, auquel cas, le fond du récipient est muni d'un clapet antiretour de remplissage en propulseur gazeux ou de tout autre système de remplissage connu ; l'organe de distribution pourrait également être constitué par le piston lui-même sur lequel on agirait directement manuellement, l'ensemble de distribution étant dès lors constitué par une seringue.

Le procédé de réalisation du piston selon l'invention décrit à propos de la variante de piston 16 selon la figure 1 est applicable à la réalisation de la variante de piston 46 représentée sur la figure 7 ; le piston 46 comprend un corps 40 constitué d'un matériau relativement rigide et un joint 47 constitué d'un matériau flexible obtenu en surmoulant partiellement le corps 40 in situ ; plus précisément, selon cette variante de la figure 7, le corps 40 du piston creux 46 présente successivement trois portions cylindriques 41, 42, 44 de diamètres successivement croissants, la portion 44 se terminant par un bord 45 de forme tronconique ; à partir de la jonction entre les portions 42 et 44, s'étend une lèvre 49 dont la section décroit jusqu'à son extrémité libre et qui entoure partiellement la portion 42 ; la lèvre 49 est venue de moulage en même temps que le corps 40 du piston 46 et est analogue à la lèvre 57 décrite à propos du piston 50 de la figure 2 ; le joint 47 a une section, par un plan passant par l'axe longitudinal du piston 46, de forme générale en parallélogramme, comme visible sur la figure 7, et présente une portion 48 semi-torique ; le joint 47 est assujetti au corps 40 par surmoulage in situ de son rebord 45. Un tel piston 46, de réalisation simple, présente les mêmes avantages que ceux décrits à propos du piston 16 de la figure 1. Le piston 46 est de préférence utilisé dans un ensemble de distribution dont l'organe de distribution est une valve de distribution et le piston poussé par un propulseur gazeux sous pression, laquelle pression plaque avantageusement le joint 47, placé à l'extrémité ouverte du piston 46, contre la paroi intérieure du récipient 2 ; mais d'excellents résultats ont également été obtenus en utilisant le piston 46 dans un ensemble de distribution dont l'organe de distribution est une pompe de distribution, comme décrit à propos de la figure 1 ; avantageusement, le corps 40 du piston 46 est en polypropylène et le joint 47 est en copolymère EPDM/polypropylène.

## Revendications

1. Ensemble de distribution comprenant un récipient (2) et un organe de distribution pour la distribution du produit contenu dans le récipient (2), le récipient (2) étant cylindrique et comportant un piston (16, 26, 46) constitué d'un corps (10, 40) en matériau rigide (30) ayant une partie cylindrique portant un joint d'étanchéité (17, 27, 47) en matériau élastique (31), caractérisé par le fait que le joint d'étanchéité (17, 27, 47) est obtenu par surmoulage du corps (10, 40) du piston (16, 26, 46) en matériau rigide (30), le matériau élastique (31) et le matériau rigide (30) étant chimiquement compatibles pour assurer la liaison du joint (17, 27, 47) et du corps (10, 40) du piston (16, 26, 46), le joint (17, 27, 47) présentant au moins une portion (18, 48) semi-torique et une lèvre d'étanchéité (19, 29).

2. Ensemble de distribution selon la revendication 1, caractérisé par le fait que le joint (27) présente au moins deux portions (28A, 28B) semi-toriques.

3. Ensemble de distribution selon l'une des revendications 1 ou 2, caractérisé par le fait que le joint (17, 27) est placé au droit d'une portion intermédiaire (25) du corps (10) du piston (16, 26).

4. Ensemble de distribution selon l'une des revendications 1 ou 2, caractérisé par le fait que le joint (47) est placé au droit du bord (45) de l'extrémité ouverte du corps (40) du piston (46).

5. Ensemble de distribution selon l'une des revendications 1 à 4, caractérisé par le fait que le joint (17, 27, 47) en matériau élastique (31) a une dureté Shore A comprise entre 30 et 120.

6. Ensemble de distribution selon l'une des revendications 1 à 5, caractérisé par le fait que le couple de matériaux rigide (30) et élastique (31) est un couple de matériaux thermoplastiques choisi dans le groupe formé par les couples polypropylène-EPDM, polypropylène-polyéthylène, polypropylène-styréniques, polypropylène-copolymère EPDM/polypropylène, polyamide-polyéthylène, polyester-EPDM, polystyrène-polyéthylène.

7. Ensemble de distribution selon l'une des revendications 1 à 6, caractérisé par le fait que le produit à distribuer a une viscosité comprise entre une valeur voisine de 1 poise et une valeur voisine de 70 poises.

8. Ensemble de distribution selon l'une des revendications 1 à 7, caractérisé par le fait que l'organe de distribution est une pompe (12) sans reprise d'air, le fond (5) du récipient (2) comportant un orifice (4).

9. Ensemble de distribution selon l'une des revendications 1 à 7, caractérisé par le fait que l'organe de distribution est une valve de distribution, le piston (16, 26, 46) étant poussé par un propulseur gazeux sous-pression prévu dans le volume compris entre le fond du récipient (2) et le piston (16, 26, 46).

10. Ensemble de distribution selon la revendication 9, caractérisé par le fait que le fond du récipient est muni d'un système de remplissage pour le remplissage en propulseur gazeux.

11. Ensemble de distribution selon l'une des revendications 1 à 7, caractérisé par le fait que l'organe de distribution est le piston (16, 26, 46) lui-même, actionnable manuellement, l'ensemble de distribution (1) constituant une seringue.

## Patentansprüche

1. Abgabevorrichtung mit einem Behälter (2) und einem Abgabemittel zur Abgabe des in dem Behälter (2) enthaltenen Produktes, wobei der Behälter (2) zylindrisch ist und einen Kolben (16, 26, 46) aufweist, der aus einem Körper (10, 40) aus starrem Material (30) gebildet ist, welcher einen zylindrischen Teil besitzt, der eine Dichtung (17, 27, 47) aus elastischem Material (31) trägt, dadurch gekennzeichnet, daß die Dichtung (17, 27, 47) durch Aufformen auf den Körper (10, 40) des Kolbens (16, 26, 46) aus starrrem Material (30) erhältlich ist, wobei das elastische Material (31) und das starre Material (30) chemisch kompatibel sind, um die Verbindung der Dichtung (17, 27, 47) und des Körpers (10, 40) des Kolbens (16, 26, 46) zu gewährleisten, wobei die Dichtung (17, 27, 47) wenigstens einen halbtorus-förmigen Abschnitt (18, 48) und eine Dichtlippe (19, 29) aufweist.

2. Abgabevorrichtung gemäß Anspruch 1, dadurch gekennzeichnet, daß die Dichtung (27) wenigstens zwei halbtorus-förmige Abschnitte (28A, 28B) aufweist.

3. Abgabevorrichtung gemäß einem der Ansprüche 1 oder 2, dadurch gekennzeichnet, daß die Dichtung (17, 27) gegenüber einem Zwischenabschnitt (25) des Körpers (10) des Kolbens (16, 26) angeordnet ist.

4. Abgabevorrichtung gemäß einem der Ansprüche 1 oder 2, dadurch gekennzeichnet, daß die Dichtung (47) gegenüber dem Rand (45) des offenen Endes des Körpers (40) des Kolbens (46) angeordnet ist.

5. Abgabevorrichtung gemäß einem der Ansprüche 1-4, dadurch gekennzeichnet, daß die Dichtung (17, 27, 47) aus elastischem Material (31) eine Shore-A-Härte zwischen 30 und 120 besitzt.

6. Abgabevorrichtung gemäß einem der Ansprüche 1-5, dadurch gekennzeichnet, daß das Paar aus starrem Material (30) und elastischem Material (31) ein thermoplastisches Materialpaar ist, das ausgewählt ist aus der Gruppe bestehend aus den Paaren Polypropylen-EPDM, Polypropylen-Polyethylen, Polypropylen-Styrol, Polypropylen-EPDM/Polypropylen-Copolymerisat, Polyamid-Polyethylen, Polyester-EPDM, Polystyrol-Polyethylen.

7. Abgabevorrichtung gemäß einem der Ansprüche 1-6, dadurch gekennzeichnet, daß das abzugebende Produkt eine Viskosität zwischen einem Wert um 1 Poise und einem Wert um 70 Poise besitzt.

8. Abgabevorrichtung gemäß einem der Ansprüche 1-7, dadurch gekennzeichnet, daß das Abgabemittel eine Pumpe (12) ist, die keine Luft ansaugt, wobei der Boden (5) des Behälters (2) eine Öffnung (4) aufweist.

9. Abgabevorrichtung gemäß einem der Ansprüche 1-7, dadurch gekennzeichnet, daß das Abgabemittel ein Abgabeventil ist, wobei der Kolben (16, 26, 46) durch ein unter Druck stehendes Treibgas angetrieben wird, welches in dem zwischen dem Boden des Behälters (2) und dem Kolben (16, 26, 46) befindlichen Volumen vorgesehen ist.

10. Abgabevorrichtung gemäß Anspruch 9, dadurch gekennzeichnet, daß der Boden des Behälters mit einem Nachfüllsystem zum Auffüllen mit Treibgas versehen ist.

11. Abgabevorrichtung gemäß einem der Ansprüche 1-7, dadurch gekennzeichnet, daß das Abgabemittel der manuell betätigbare Kolben (16, 26, 46) selbst ist, wobei die Abgabevorrichtung (1) eine Spitze bildet.

## Claims

1. Dispensing assembly comprising a container (2) and a dispensing member for dispensing the product contained in the container (2), the container (2) being cylindrical and including a piston (16, 26, 46) consisting of a body (10, 40) made of rigid material (30) having a cylindrical part carrying a seal (17, 27, 47) made of elastic material (31), characterized in that the seal (17, 27, 47) is obtained by overmoulding the body (10, 40) of the piston (16, 26, 46) made of rigid material (30), the elastic material (31) and the rigid material (30) being chemically compatible in order to ensure that the seal (17, 27, 47) and the body (10, 40) of the piston (16, 26, 46) are bonded together, the seal (17, 27, 47) having at least one semi-toric portion (18, 48) and a sealing lip (19, 29).

2. Dispensing assembly according to Claim 1, characterized in that the seal (27) has at least two semi-toric portions (28A, 28B).

3. Dispensing assembly according to either of Claims 1 and 2, characterized in that the seal (17, 27) is placed right at an intermediate portion (25) of the body (10) of the piston (16, 26).

4. Dispensing assembly according to either of Claims 1 and 2, characterized in that the seal (47) is placed right at the edge (45) of the open end of the body (40) of the piston (46).

5. Dispensing assembly according to one of Claims 1 to 4, characterized in that the seal (17, 27, 47) made of elastic material (31) has a Shore A hardness of between 30 and 120.

6. Dispensing assembly according to one of Claims 1 to 5, characterized in that the pair of rigid (30) and elastic (31) materials is a pair of thermoplastic materials which is chosen from the group formed by the pairs polypropylene-EPDM, polypropylene-polyethylene, polypropylene-styrenics, polypropylene-EPDM/polypropylene copolymer, polyamide-polyethylene, polyester-EPDM, polystyrene-polyethylene.

7. Dispensing assembly according to one of Claims 1 to 6, characterized in that the product to be dispensed has a viscosity of between an approximate value of 1 poise and an approximate value of 70 poise.

8. Dispensing assembly according to one of Claims 1 to 7, characterized in that the dispensing member is a pump (12) having no air uptake, the bottom (5) of the container (2) including an orifice (4).

9. Dispensing assembly according to one of Claims 1 to 7, characterized in that the dispensing member is a dispensing valve, the piston (16, 26, 46) being pushed by a gaseous propellant under pressure, the said propellant being provided in the volume lying between the bottom of the container (2) and the piston (16, 26, 46).

10. Dispensing assembly according to Claim 9, characterized in that the bottom of the container is equipped with a filling system for filling with gaseous propellant.

11. Dispensing assembly according to one of Claims 1 to 7, characterized in that the dispensing member is the piston (16, 26, 46) itself, which can be manually actuated, the dispensing assembly (1) constituting a syringe.
